# NEUE EUROPÄISCHE PATENTSCHRIFT

(11) **EP 0 483 543 B2**
(45) Veröffentlichungstag und Bekanntmachung des Hinweises auf die Entscheidung über den Einspruch: **14.08.1996**
(45) Hinweis auf die Patenterteilung: 09.03.1994
(21) Anmeldenummer: 91116982.9
(22) Anmeldetag: 04.10.1991
(51) Int. Cl.: F16H 47/02

(54) **Hydrostatischer Antrieb, vorzugsweise für ein Erdbewegungsfahrzeug, beispielsweise Radlader**
Hydrostatic transmission, preferably for an earth moving machine, for example a shovel loader
Transmission hydrostatique, préférablement pour un engin de terrassement, par exemple une pelle automotrice

(30) Priorität: 31.10.1990 DE 4034689
(43) Veröffentlichungstag der Anmeldung: 06.05.1992
(73) Patentinhaber: Liebherr-Werk Bischofshofen GmbH, A-5500 Bischofshofen (AT)
(72) Erfinder: Schröder, Klaus, Dipl.-Ing., W-7951 Kirchdorf/Iller (DE)
(74) Vertreter: Gossel, Hans K., Dipl.-Ing.

(56) Entgegenhaltungen:
- EP-A- 0 234 136
- DE-B- 1 530 899
- GB-A- 1 093 278
- US-A- 3 990 327
- US-A- 4 896 563

## Beschreibung

Die Erfindung betrifft einen hydrostatischen Antrieb nach dem Oberbegriff des Patentanspruchs 1.

Hydrostatische Antriebe finden wegen ihrer günstigen Steuerbarkeit und Drehmoment-Drehzahl-Kurve vielfältige Anwendung und werden vorzugsweise bei Erdbewegungsfahrzeugen, wie beispielsweise Raupen, Radlader und Baggern, eingesetzt. Werden Axialkolbenmotoren Schaltgetriebe nachgeordnet, müssen diese über den gesamten Drehzahlbereich das erforderliche Drehmoment aufbringen, das häufig entsprechend leistungsstärkere und daher größere Axialkolbenmotoren bedingt.

Aus US-A- 4,896,563 ist ein hydrostatischer Antrieb nach dem Oberbegriff des Patentanspruchs 1 bekannt, bei dem ein hydrostatischer Stellmotor mit dem Planetenträger eines Planetenräder-Umlaufgetriebes gekoppelt ist und die Abtriebswelle des anderen hydrostatischen Stellmotors ein Ritzel trägt, das mit einer Außenverzahnung des mit einer Innenverzahnung versehenen Gehäuses des Planetenräder-Umlaufgetriebes kämmt. Über eine Kupplung ist das Sonnenrad starr mit dem Gehäuse kuppelbar. Der bekannte hydrostatische Antrieb gestattet auf diese Weise drei unterschiedliche Geschwindigkeiten, nämlich einmal eine niedrige Geschwindigkeit, bei der das Planetenräder-Umlaufgetriebe als starre Einheit durch beide Motoren angetrieben wird, eine mittlere Geschwindigkeit, bei der die Kupplung gelöst ist und der zweite hydrostatische Stellmotor stillsteht, und eine hohe Geschwindigkeit, bei der der zweite Motor den Planetenträger antreibt und der erste Motor stillsteht

Aufgrund des Planetenräder-Umlaufgetriebes weist der bekannte Antrieb eine aufwendige Konstruktion auf.

Aufgabe der Erfindung ist es daher, einen hydrostatischen Antrieb der eingangs angegebenen Art zu schaffen, der mit kleineren und leistungsschwächeren Axialkolbenmotoren das erforderliche Drehmoment über den gewünschten Drehzahlbereich bei günstigem Schaltverhalten zu erbringen vermag.

Erfindungsgemäß wird diese Aufgabe bei einem Antrieb der gattungsgemäßen Art durch die kennzeichnenden Merkmale des Patentanspruchs 1 gelöst.

Wird das erfindungsgemäße Getriebe beispielsweise für einen Radlader verwendet, ist ein Axialkolbenmotor beim Anfahren über seinen ersten Gang und der zweite Axialkolbenmotor über seinen zweiten Gang mit der Abtriebswelle gekuppelt, so daß ein entsprechend großes Anfahrdrehmoment zur Verfügung steht. Während der Geschwindigkeitserhöhung wird der erste Axiakolbenmotor zunehmend mit abnehmenden Drehmoment gegen null geschwenkt. Hat der erste Axialkolbenmotor etwa den Schwenkwinkel null erreicht, kann das Schaltgetriebe ausgekuppelt werden, so daß allein der zweite Axialkolbenmotor, der bereits auf den zweiten Gang geschaltet ist, das Fahrzeug bis auf die Endgeschwindigkeit beschleunigt. Wird auch in dem oberen Geschwindigkeitsbereich ein größeres Drehmoment benötigt, kann der erste Axialkolbenmotor in einer Stellung, in der dessen Schluckmenge null oder nahezu null ist, auf den zweiten Gang geschaltet werden, so daß auch bei entsprechender Verschwenkung der erste Axialkolbenmotor im oberen Geschwindigkeitsbereich Leistung abgibt. Ebenso kann auch der zweite Axialkolbenmotor im unteren Geschwindigkeitsbereich in den ersten Gang geschaltet werden.

Nach einer erfinderischen Weiterbildung ist vorgesehen, daß zwischen einer Eingangswelle des Getriebes und einer schaltbare Zahnräder tragenden Welle mindestens eine Getriebestufe angeordnet ist Diese Getriebestufe kann die Drehzahl des dieser zugeordneten Axialkolbenmotors ins Schnelle, vorzugsweise aber ins Langsame übersetzen. Erfolgt eine Übersetzung durch die Getriebestufe ins Langsame und weist das jedem Axialkolbenmotor zugeordnete Schaltgetriebe zwei Stufen auf, kann ein mit einem derartigen Antrieb versehenes Fahrzeug im unteren Drehzahlbereich über beide Axialkolbenmotore mit großem Drehmoment angetrieben werden, wobei im Bereich der Endgeschwindigkeit nur noch ein Axialkolbenmotor in entsprechend kleinerer Übersetzung den Antrieb übernimmt

Zweckmäßigerweise sind die beiden Axialkolbenmotore durch eine Einrichtung miteinander gekuppelt, die deren gleichzeitiges Schwenken auf einen gegen null gehenden Schrägungswinkel verhindert, so daß die Motoren nicht überdreht werden oder durchgehen können.

Die Schaltung der jedem Axialkolbenmotor zugeordneten Getriebestufen kann durch eine Axialverschiebung kuppelnder Zahnräder oder aber auch durch Lamellenkupplungen erfolgen. Erfolgt die Schaltung durch verschiebliche kuppelnde Zahnräder, werden zweckmäßigerweise übliche Synchronisationseinrichtungen vorgesehen.

Ein günstiges automatisch schaltbares Getriebe läßt sich erreichen, wenn eine Steuereinrichtung vorgesehen ist, die den Schrägungswinkel der Axialkolbenmotore drehzahl- und/oder druckabhängig steuert Weiterhin ist zweckmäßigerweise eine Schalteinrichtung vorgesehen, die die Schaltung der Gänge drehzahl- und/oder drehmomentabhängig steuert.

Ausführungsbeispiele der Erfindung werden nachstehend anhand der Zeichnung näher erläutert. In dieser zeigt
- Fig.1: einen Querschnitt durch zwei mit einem schaltbaren Getriebe gekuppelte Axialkolbenmotore in Schrägachsenbauweise, bei dem beide Axialkolbenmotore unmittelbar mit den die schaltbaren Zahnräder tragenden Wellen verbunden sind,
- Fig.2: einen der Fig.1 entsprechenden Schnitt, wobei jedoch zwischen einem Axialkolbenmotor und der diesem zugeordneten schaltbare Zahnräder tragenden Welle eine Stirnradgetriebestufe angeordnet ist,
- Fig.3: ein Zugkraft- Geschwindigkeitsdiagramm für einen Fahrzeugantrieb mit einem Getriebe nach Fig.2 und
- Fig.4: ein der Fig.3 entsprechendes Drehzahl-Geschwindigkeits-Diagramm.

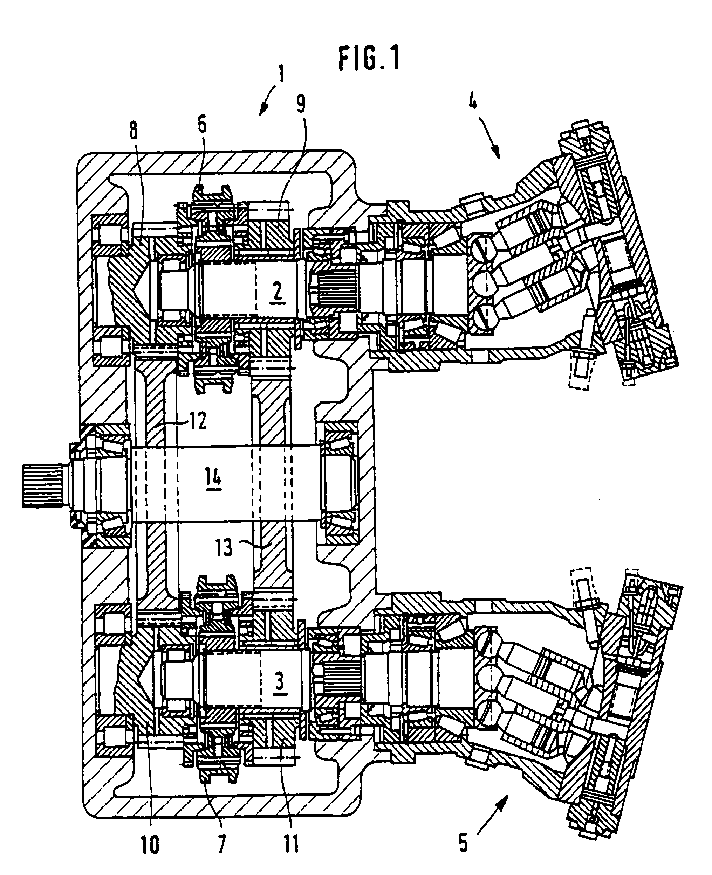

Aus Fig.1 ist ein Schaltgetriebe 1 ersichtlich, an dessen Eingangswellen 2,3 jeweils Axialkolbenmotore 4,5 in Schrägachsenbauweise angekuppelt sind. An die Eingangswellen 2,3 sind über übliche Getriebeschalteinrichtungen 6,7 die Zahnräder 8,9 und 10,11 ankuppelbar, die ihrerseits jeweils mit dem im Durchmesser größeren Zahnrad 12 und im Durchmesser kleineren Zahnrad 13 kämmen, die auf der Ausgangswelle 14 aufgekeilt oder in sonstiger Weise befestigt sind.

Darüberhinaus weisen die Schalteinrichtungen 6,7 Schaltstellungen auf, in denen keines der Zahnräder 8,9 und 10,11 mit den Wellen 2,3 in Antriebsverbindung steht.

Sind die Eingangswellen 2 und/oder 3 mit den Zahnrädern 8 und/oder 10 gekuppelt, ist der erste Gang geschaltet, während die Ankupplung der Zahnräder 9 und/oder 11 an die Wellen 2 und/oder 3 die Schaltung des zweiten Ganges bedeutet.

Die Axialkolbenmotore 4,5 sind mit nicht näher dargestellten steuerbaren Schwenkeinrichtungen versehen, die den Schrägungswinkel von der größten Schluckmenge Qmax bis gegen null verändern können.

Ist das aus Fig.1 ersichtliche Getriebe der Antrieb beispielsweise eines Radladers, kann dieser durch nicht dargestellte automatische Schwenk- und Schalteinrichtungen in folgender Weise geschaltet werden:

Während des Anfahrens, bei dem ein großes Anfahrdrehmoment benötigt wird, ist der Axialkolbenmotor 5 über den ersten Gang 10,12 mit der Abtriebswelle 14 und der Axialkolbenmotor 4 über den zweiten Gang 9,13 mit der Abtriebswelle 14 gekuppelt. Ist eine Geschwindigkeit von beispielsweise etwa 15 km/h erreicht, ist der Axialkolbenmotor 5 auf etwa Schwenkwinkel null bzw. Schluckmenge null geschaltet worden, so daß das Zahnrad 10 auf Leerlauf geschaltet werden kann und nur noch der Axialkolbenmotor 4 über den zweiten Gang 9,13 das Fahrzeug auf seine Endgeschwindigkeit beschleunigt.

Die Schaltung kann auch so erfolgen, daß nach dem Ausfahren des ersten Ganges 10,12 über den Axialkolbenmotor 5 dessen zweiter Gang 11,13 geschaltet wird, so daß bis zur Endgeschwindigkeit ein großes Drehmoment zur Verfügung steht.

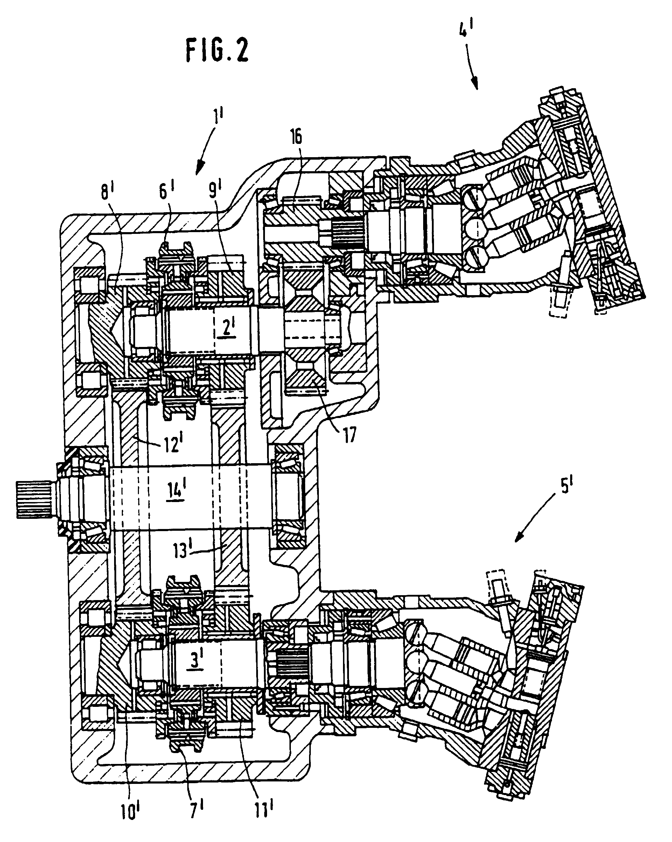

Der aus Fig.2 ersichtliche Antrieb unterscheidet sich von dem anhand der Fig.1 beschriebenen nur dadurch, daß zwischen dem Axialkolbenmotor 4' und der Schaltgetriebewelle 2' eine aus den Zahnrädern 16,17 bestehende Getriebestufe angeordnet ist, die die Drehzahl des Axialkolbenmotors 4 ins Langsame übersetzt. Der aus Fig.2 ersichtliche Antrieb ermöglicht einen günstigen Antrieb eines mit diesem versehenen Fahrzeugs.

Typische Schaltzustände werden nachstehend kurz erläutert:

Wird ein großes Anfahrmoment benötigt, sind beide Axialkolbenmotore 4',5' auf ihre ersten Gänge 8',12' und 10',12' geschaltet. Mit zunehmender Geschwindigkeit wird der Axialkolbenmotor 4' in Richtung auf seinen Schwenkwinkel oder eine Schluckmenge null verschwenkt. Ist das Drehmoment des Axialkolbenmotors 4' im Bereich des Schwenkwinkels null ebenfalls null, erfolgt eine Schaltung auf den zweiten Gang 9',13'. Nach diesem Schaltvorgang wird der Axialkolbenmotor 5' zunehmend gegen null geschwenkt, so daß dessen Drehmoment null wird und für diesen Axialkolbenmotor 5' der zweite Gang 11',13 geschaltet werden kann. Über die sen Gang wird nun die Endgeschwindigkeit erreicht, wobei der Axialkolbenmotor 4' gegen eine Schluckmenge null geschwenkt werden kann, in der dann über die Schalteinrichtung 6' eine Schaltung auf Leerlauf erfolgt, so daß nur noch der Axialkolbenmotor 5' den Antrieb übernimmt.

Ist nur ein kleineres Anfahrmoment erforderlich, kann der Axialkolbenmotor 4' gleich auf seinen zweiten Gang 9',13' geschaltet werden, während sich der Axialkolbenmotor 5' in seinem ersten Gang 10',12' befindet.

Bei abnehmender Geschwindigkeit erfolgt eine Schaltung in entsprechend umgekehrter Weise.

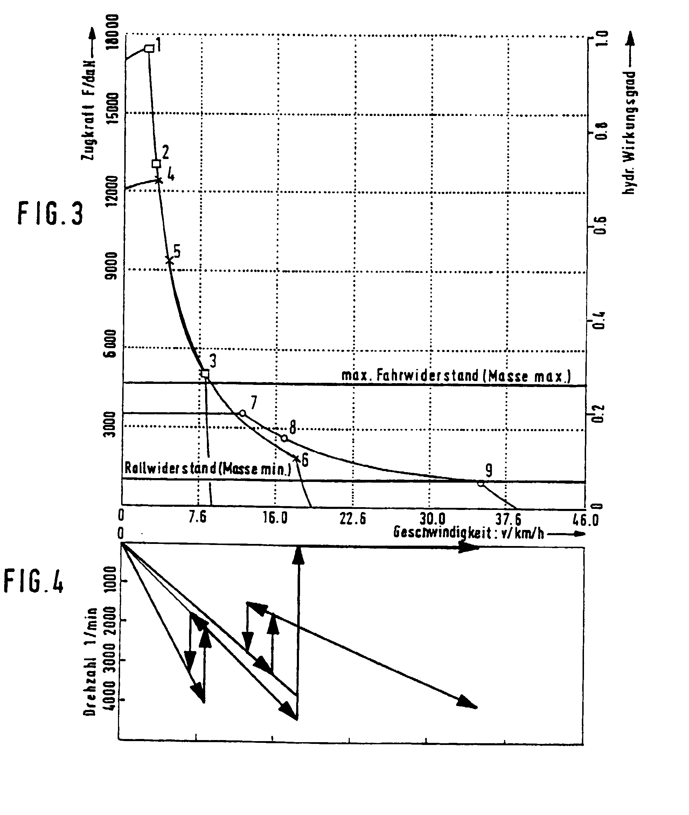

Aus Fig.3 ist das Zugkraft-Geschwindigkeits- bzw. Drehzahl-Drehmomentdiagramm für den Antrieb nach Fig.2 ersichtlich. Aus diesem Diagramm folgt, daß ein nahezu stufenloses Fahrdiagramm erreichbar ist.

Aus Fig.4 ist das zugehörige Drezahl-Geschwindigkeitsdiagramm ersichtlich. Die unteren Kurven beziehen sich auf die Drehzahl des Axialkolbenmotors 4' in seinen beiden Gängen 8',12' und 9',13', während die beiden oberen Kurven den Axialkolbenmotor 5' in seinen beiden Gängen 10',12' und 11',13' betreffen.

Weiterhin ist aus dem Diagramm gemäß Fig.4 ersichtlich, daß zwischen dem Hochfahren und Herunterfahren hinsichtlich der Schaltzeitpunkte eine Hysterese vorhanden ist, so daß ein häufiges Schalten in einem undefinierten Schaltpunkt vermieden ist.

## Patentansprüche

1. Hydrostatischer Antrieb, vorzugsweise für ein Erdbewegungsfahrzeug, beispielsweise Radlader, bestehend aus zwei für sich getrennt steuerbaren hydrostatischen Verstellmotoren (4, 5; 4', 5'), die jeweils mit einer von zwei Eingangswellen (2, 3; 2', 3') eines Schaltgetriebes (1, 1') gekuppelt sind, die über jeweils mindestens zwei schaltbare Getriebestufen (6 bis 13; 6' bis 13') mit einer gemeinsamen und einzigen Abtriebswelle (14, 14') kuppelbar sind,
**dadurch gekennzeichnet**,
daß die hydrostatischen Verstellmotoren aus Axialkolbenmotoren (4, 5; 4', 5') in Schrägachsen- oder Schrägscheibenbauweise bestehen, deren Schrägungswinkel mit abnehmendem Drehmoment und zunehmender Drehzahl gegen Null steuerbar sind, und
daß die Getriebestufen (6 bis 13; 6' bis 13') der einen der Eingangswellen unabhängig von denen der anderen Eingangswelle schaltbar sind.

2. Antrieb nach Anspruch 1, dadurch gekennzeichnet, daß zwischen einer Eingangswelle des Getriebes und einer schaltbare Zahnräder (8', 9') tragenden Welle (2') mindestens eine Getriebestufe (16, 17) angeordnet ist.

3. Antrieb nach Anspruch 1 oder 2, dadurch gekennzeichnet, daß die Axialkolbenmotoren (4, 5; 4', 5') durch eine Einrichtung miteinander gekuppelt sind, die deren gleichzeitiges Schwenken auf gegen Null gehende Schrägungswinkel verhindert.

4. Antrieb nach einem der Ansprüche 1 bis 3, dadurch gekennzeichnet, daß die Schaltung des Schaltgetriebes (1, 1') durch Axialverschiebung kuppelbarer Zahnräder oder durch Lamellenkupplungen erfolgt

5. Antrieb nach einem der Ansprüche 1 bis 4, dadurch gekennzeichnet, daß eine Steuereinrichtung vorgesehen ist, die die Schrägungswinkel der Axialkolbenmotoren (4, 5; 4', 5') drehzahl- und/oder druckabhängig steuert.

6. Antrieb nach einem der Ansprüche 1 bis 5, dadurch gekennzeichnet, daß eine Schalteinrichtung vorgesehen ist, die die Schaltung der Gänge drehzahl- und/oder drehmomentabhängig steuert.

## Claims

1. Hydrostatic transmission, preferably for an earth moving machine, for example a shovel loader, comprising two independently controllable hydrostatic adjusting motors (4, 5; 4', 5'), each connected with one of two input shafts (2, 3; 2', 3') of a change-speed gear unit (1, 1') that each can be connected to a common and single output shaft (14, 14') by at least two switchable gear stages (6-13; 6'-13'),
characterised in that
the hydrostatic adjusting motors consist of axial piston motors (4, 5; 4', 5') in inclined axis or swash plate design, the inclination angles of which can be brought under control, towards zero with decreasing torque and increasing speed, and
the gear stages (6-13; 6'-13') of one of the input shafts can be switched independently from those of the other input shaft.

2. Transmission according to claim 1, characterised in that at least one gear stage (16, 17) is arranged between an input shaft of the gear unit and a shaft (2') carrying switchable gearwheels (8', 9').

3. Transmission according to claim 1 or 2, characterised in that the axial piston motors (4, 5; 4', 5') are connected together by a means which prevents their simultaneous rotation to inclination angles approaching zero.

4. Transmission according to one of the claims 1 to 3, characterised in that gear change of the change-speed gear unit (1, 1') is effected by axial displacement of connectable gearwheels or by multiplate clutches.

5. Transmission according to one of the claims 1 to 4, characterised in that a control means is provided, which controls the inclination angles of the axial piston motors (4, 5; 4', 5') dependently on speed and/or pressure.

6. Transmission according to one of the claims 1 to 5, characterised in that a switching means is provided, which controls the changing of gears dependently on speed and/or torque.

## Revendications

1. Entraînement hydrostatique, préférablement pour un engin de terrassement, par exemple une pelle automotrice, composé de deux moteurs à cylindrée variable (4, 5; 4', 5') qui peuvent être commandés indépendamment et dont chacun est accouplé à l'un de deux arbres d'entrée (2, 3; 2', 3') d'une transmission à changement de vitesse (1, 1') qui peuvent chacun être accouplés à un arbre seul et commun de sortie (14, 14') par au moins deux étages de transmission (6-13; 6'-13') engrenables,
caractérisé en ce que
les moteurs à cylindrée variable consistent en des moteurs à piston axial (4, 5; 4', 5') montés à axe oblique ou a disque oblique. dont les angles d'obliquité peuvent être amenés à zéro lorsque le couple de rotation diminue et lorsque la vitesse de rotation augmente,
et
les étages de transmission (6-13; 6'-13') de l'un des arbres d'entrée peuvent être embrayés indépendamment de ceux de l'autre arbre d'entrée.

2. Entraînement suivant la revendication 1, caractérisé en ce qu'entre un arbre d'entrée de la transmission et un arbre (2') portant des roues dentées engrenables (8'. 9') est disposé au moins un étage de transmission (16, 17).

3. Entraînement suivant la revendication 1 ou 2 , caractérisé en ce que les moteurs à piston axial (4, 5; 4', 5') sont accouplées l'un à l'autre par un dispositif qui empêche leur inclinaison simultanée vers un angle d'obliquité tendant vers zéro.

4. Entraînement suivant l'une des revendications 1 à 3, caractérisé en ce que l'embrayage de la transmission à changement de vitesse (1, 1') se fait par translation axiale des roues dentées engrenables ou par le biais d'embrayages à disques multiples.

5. Entraînement suivant l'une des revendications 1 à 4. caractérisé en ce qu'est prévu un dispositif de commande qui commande l'angle d'obliquité des moteurs à piston axial (4, 5; 4', 5') en fonction de la vitesse de rotation et/ou de la pression.

6. Entraînement suivant l'une des revendications 1 à 5, caractérisé en ce qu'est prévu un dispositif d'engrenage qui commande l'embrayage de la marche en fonction de la vitesse de rotation et/ou du couple de rotation.
